# EUROPEAN PATENT APPLICATION

(11) **EP 1 895 763 A2**
(43) Date of publication of application: **05.03.2008**
(21) Application number: 07016936.2
(22) Date of filing: 29.08.2007
(51) Int. Cl.: H04N 5/217

(54) **Imaging device**

(30) Priority: 30.08.2006 JP 2006234030
(71) Applicant: Funai Electric Co., Ltd., Daito-shi, Osaka 574-0013 (JP)
(72) Inventor: Hasegawa, Kenichi, Osaka 574-0013 (JP)
(74) Representative: Grünecker, Kinkeldey, Stockmair & Schwanhäusser Anwaltssozietät

(57) **Abstract**

An imaging device comprising: pixel value obtaining means for obtaining pixel values of a target pixel and adjacent pixels; weighting coefficient determining means for determining a weighting coefficient; average calculating means for calculating a weighted average of the pixel values of the target pixel and the adjacent pixels; pixel value converting means for replacing the pixel value of the target pixel with the weighted average calculated by the average calculating means; and difference value calculating means for calculating a difference value between a largest pixel value and a smallest pixel value of the pixel values of the target pixel and the adjacent pixels. The weighting coefficient determining means changes the weighting coefficient for each of the adjacent pixels.

## Description

### BACKGROUND OF THE INVENTION

### 1. Field of the Invention

The present invention relates to an imaging device, and more particularly relates to the process of removing noise contained in a taken image.

### 2. Description of the Related Art

When taking an image of an object under low light intensity with an imaging device such as a digital still camera or the like, the taken image may have a lot of noise to be not clear. In view of that, a known imaging device sets a small square area of e.g. 3 by 3 or 5 by 5 pixels around one of the pixels, a target pixel, in a taken image and calculates the average of pixel values of the pixels within the small area. The imaging device then performs a noise removal process using the average value as the pixel value for the target pixel. However, while reducing the noise, the imaging device smoothes contours or the like in an image taken by the device. As a result, the taken image may be blurred. In order to avoid the problem, it has been proposed to extract contours within a small area by performing a two dimensional differentiation and thereby determine whether or not noise should be removed. However, this technique increases the amount of calculation, and further may cause an image to look unnatural at the boundary between a portion where noise is removed and a portion where noise is not removed.

In view of the above problem, Japanese laid-open patent publication No. Hei 10-336451 discloses an imaging device that reduces noise in an image taken by the device and improves the edge sharpness by combining the largest or smallest one of the pixel values of a target pixel and pixels near the target pixel with a weighted average of the pixel values and varying the combining ratio in accordance with the contrast ratio around the target pixel. Japanese laid-open patent publication No. 2005-295488 discloses another imaging device. The imaging device has first signals obtained by subtracting from video signals output signals of a weighted adder circuit, which weights input signals and adds up the weighted signals, and second signals obtained by coring the first signals. The imaging device selects and outputs either the first signals or the second signals based on a determination depending on a contrast. However, the above described conventional devices both use fixed weighting coefficients for calculation of weighted average values. Therefore, images taken by the devices may be blurred while noise can be reduced.

Japanese laid-open patent publication No. 2004-166010 discloses an imaging device that obtains pixel values of a target pixel and a plurality of adjacent pixels adjacent to the target pixel and compares a threshold with the difference between the largest and the smallest of the obtained pixel values (hereinafter referred to as "difference value"). When the difference value is larger than the threshold, the imaging device determines that the portion is an edge portion. Otherwise, when the difference value is smaller than the threshold, the imaging device determines that the portion is a non-edge portion and reduces noise by outputting a median using a median filter. However, the imaging device may cause an image to look unnatural at the boundary between the edge portion and the non-edge portion.

### SUMMARY OF THE INVENTION

An object of the present invention is to provide an imaging device that can reduce the time required for noise removal and further prevent contours of a taken image from being blurred as a result of the noise removal.

According to an aspect of the present invention, this object is achieved by an imaging device comprising: imaging means for taking an image of an object to have a taken image made up of a collection of pixels each having a pixel value including at least any one of a luminance value, a color difference value, and a color value; control means for controlling components, which include the imaging means, in the imaging device; pixel value obtaining means for obtaining a pixel value of a target pixel, which is one of the pixels in the taken image, and pixel values of adjacent pixels adjacent to the target pixel; weighting coefficient determining means for determining a weighting coefficient to weight in a given manner each of the pixel values of the adjacent pixels that are obtained by the pixel value obtaining means; average calculating means for calculating a weighted average of the pixel values of the target pixel and the adjacent pixels by using the pixel value of the target pixel, the pixel values of the adjacent pixels, and the weighting coeffcient; pixel value converting means for replacing the pixel value of the target pixel with the weighted average calculated by the average calculating means; and difference value calculating means for calculating a difference value between a largest pixel value and a smallest pixel value of the pixel values of the target pixel and the adjacent pixels that are obtained by the pixel value obtaining means, wherein the weighting coefficient determining means changes the weighting coefficient for each of the adjacent pixels in accordance with the difference value calculated by the difference value calculating means.

Preferably, the weighting coefficient determining means changes the weighting coefficient for each of the adjacent pixels so that the weighting coefficient decreases as the difference value increases.

The imaging device with the above configuration changes the weighting coefficient in accordance with the difference value. Therefore, for example, when the variation in the pixel values is large, i.e., when the difference value is large, the imaging device can reduce the degree of averaging of the pixel values when obtaining the weighted average. On the other hand, when the variation in the pixel values is small, i.e., when the difference value is small, the imaging device can increase the degree of averaging of the pixel values when obtaining the weighted average. Accordingly, the imaging device can reduce noise without breaking contours or other fine structures of a taken image. In addition, the imaging device can remove noise easily as compared to conventional noise removal processes, e.g. the process by two dimensional differentiation. Therefore, the time required for noise removal can be reduced.

Preferably, for the difference value between zero and a first difference threshold, the weighting coefficient determining means uses a fixed weighting coefficient for each of the adjacent pixels.

Preferably, for the difference value larger than the first difference threshold, the weighting coefficient determining means changes the weighting coefficient for each of the adjacent pixels so that the weighting coefficient decreases as the difference value increases.

Preferably, the weighting coefficient determining means changes the weighting coefficient for each of the adjacent pixels so that rate of change of the weighting coefficient with respect to the difference value is lower for the difference value larger than a second difference threshold than for the difference value between the first difference threshold and the second difference threshold.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG 1 is a block diagram showing the internal configuration of an imaging device according to one embodiment of the present invention;
FIG 2 shows the position of a target pixel relative to adjacent pixels according to the imaging device;
FIG 3 is a flowchart showing the process of removing luminance noise according to the imaging device;
FIG 4 is a graph showing an example of the relationship between a difference value and a base weighting coefficient according to the imaging device;
FIG 5 shows an example of the position of a target pixel relative to adjacent pixels according to the imaging device;
FIG 6 shows an example of the position of a target pixel relative to adjacent pixels according to the imaging device;
FIG 7 shows an example of the position of a target pixel relative to adjacent pixels according to the imaging device;
FIG 8 is a graph showing an example of the relationship between a difference value and a base weighting coefficient according to the imaging device;
FIG 9 is a graph showing an example of the relationship between a difference value and a base weighting coefficient according to the imaging device; and
FIG 10 is a graph showing an example of the relationship between a difference value and a base weighting coefficient according to the imaging device.

### DESCRIPTION OF THE PREFERRED EMBODIMENTS

Referring now to the accompanying drawings, an imaging device embodying the present invention is described. It is to be noted that the following description of preferred embodiment of the present invention has been presented for purposes of illustration and description, and is not intended to be exhaustive or to limit the present invention to the precise form disclosed.

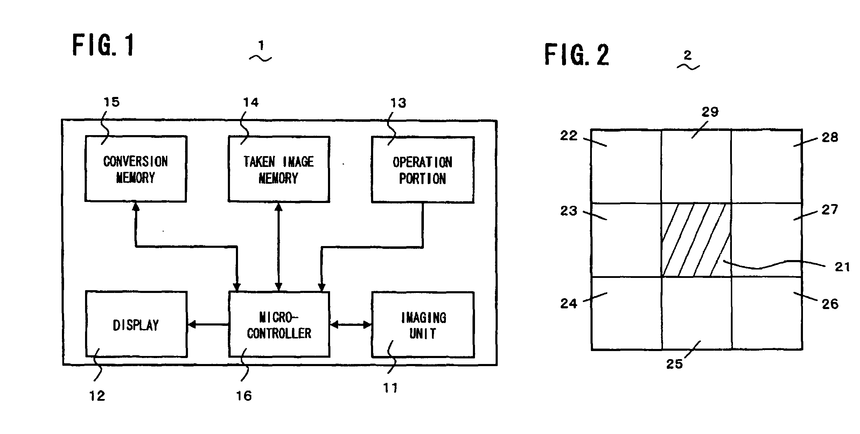

FIG 1 shows the configuration of a control system in an imaging device such as a digital still camera or the like according to one embodiment of the present invention. The imaging device 1 comprises: an imaging unit 11 (imaging means) for imaging an object; an operation portion 13 having operation buttons and the like; a display 12 for displaying an image taken by the device, various messages, and so on; a taken image memory 14 for storing a taken image; a conversion memory 15 for storing an image obtained after removal of noise from a taken image; and a microcontroller 16 (control means) for controlling each component in the imaging device.

An image taken using the imaging unit 11 is made up of a collection of pixels each having a pixel value including at least any one of a luminance value, a color difference value (for example, color difference value based on ITU-R BT. 601, which is a standard developed by the International Telecommunication Union), and a color value. The microcontoller 16 functions as pixel value obtaining means, weighting coefficient determining means, average calculating means, pixel value converting means, and difference value calculating means recited in the claims.

Referring now to FIG 2, a target pixel and adjacent pixels recited in the claims are described. A target pixel is one of pixels making up a taken image. Adjacent pixels are a plurality of pixels adjacent to the target pixel. FIG 2 shows the position of a target pixel 21 relative to adjacent pixels 22 to 29 adjacent to the target pixel 21. In this example, the target pixel 21 and the adjacent pixels 22 to 29 are arranged in a 3 by 3 matrix. As shown in FIG 2, the adjacent pixels 22 to 29 are eight pixels surrounding the target pixel 21.

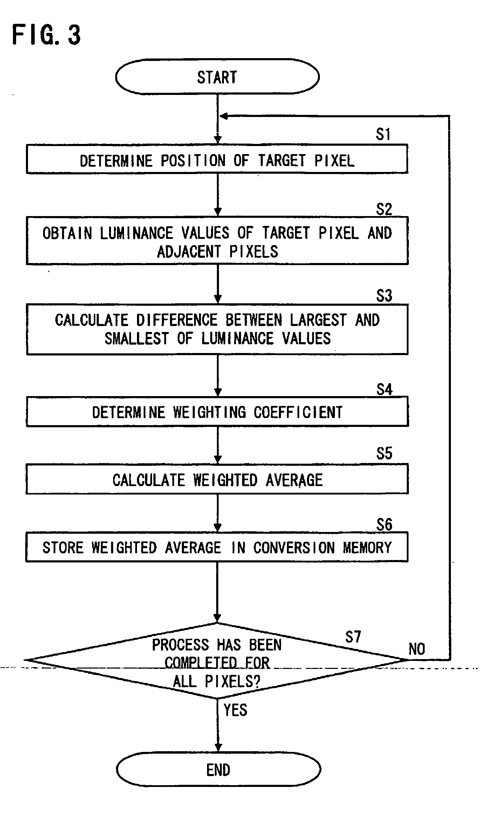

Referring now to FIG 3, it is described how the imaging device 1 removes noise. In the example described here, a target pixel and adjacent pixels are positioned as shown in FIG 2, and the noise removal process is performed for the luminance value in the pixel value. First, the microcontroller 16 obtains from the taken image memory 14 a taken image for which the noise removal process is performed, and determines the position of a target pixel of the pixels that make up the obtained image (S1). The microcontroller 16 then obtains the luminance values of the target pixel 21 and the adjacent pixels 22 to 29 (S2), and calculates the difference between the largest and the smallest of the obtained luminance values (which is hereinafter referred to simply as "difference value") (S3).

Subsequently, based on the calculated difference value, the microcontroller 16 determines a weighting coefficient for weighting the luminance values in a given manner (S4), and calculates the weighted average of the luminance values of the target pixel 21 and the adjacent pixels 22 to 29 by using the luminance value of the target pixel 21, the luminance values of the adjacent pixels 22 to 29, and the weighting coefficient (S5). The process of determining the weighting coefficient at the step S4 and the process of calculating the weighted average at the step S5 are described later in detail.

The microcontroller 16 stores in the conversion memory 15 the weighted average calculated at the step S5 as the luminance value for the target pixel 21 (S6). After completion of the above described process for all the pixels in the taken image (YES at S7), the microcontroller 16 ends the noise removal process. At the end of the noise removal process, the conversion memory 15 contains the taken image with luminance noise removed. When the above described process has not been completed for all the pixels in the taken image yet (NO at S7), the microcontroller 16 repeats the above process from the step S 1.

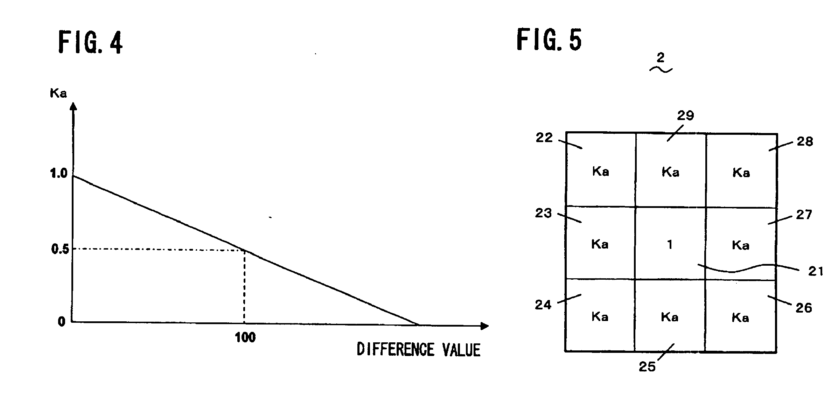

Referring now to FIG 4 and FIG 5, the weighting coefficient determining process at the step S4 and the weighted average calculating process at the step S5 are described in detail. FIG 4 shows the relationship between the above described difference value and a weighting coefficient Ka as a base (hereinafter referred to as "base weighting coefficient). FIG 5 shows the ratio of the weighting coefficient for the target pixel 21 to those for the adjacent pixels 22 to 29. As shown in FIG 4, the base weighting coefficient Ka changes so as to be zero when the difference value is the maximum and to be one when the difference value is the minimum. In other words, the base weighting coefficient Ka decreases as the difference value increases. For example, when the difference value is 100, the base weighting coefficient Ka is determined to be 0.5 as shown in FIG 4. Accordingly, as shown in FIG 5, the weighted average is calculated by adding the luminance value of the target pixel 21 multiplied by 1 and the respective luminance values of the adjacent pixels 22 to 29 multiplied by 0.5, and dividing the sum by 9.

As described above, the imaging device 1 changes the base weighting coefficient Ka and the weighting coefficients in accordance with the difference value. Therefore, the imaging device 1 can reduce the degree of averaging for obtaining the weighted average when the variation in luminance values is large, i.e., when the difference value is large, and can increase the degree when the variation in luminance values is small, i.e., when the difference value is small. Accordingly, it is possible to reduce noise in the pixel value of a target pixel without breaking contours or other fine structures of a taken image. In addition, since the noise removal process is simple as compared to the conventional processes such as the process by two dimensional differentiation, it can be performed relatively fast. Therefore, the processing time can be reduced.

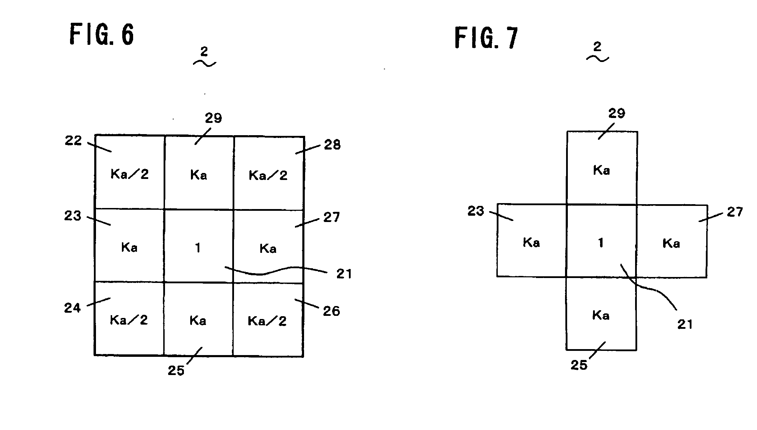

The ratio of the weighting coefficient for the target pixel 21 to each of the adjacent pixels 22 to 29 may be modified. For example, as shown in FIG 6, the weighting coefficients for the adjacent pixels 22, 24, 26, and 28, which are diagonally opposite to the target pixel 21, may be the base weighting coefficient Ka divided by 2. It is also possible to use a given value as the weighting coefficient for an adjacent pixel at a given position. Alternatively, as shown in FIG 7, the weighted average may be calculated using the target pixel 21 in combination with only the adjacent pixels 23, 25, 27, and 29 that are positioned above, below and on either side of the target pixel 21. This modification can make the weighted average calculating process still easier, thus further reducing the time required for noise removal.

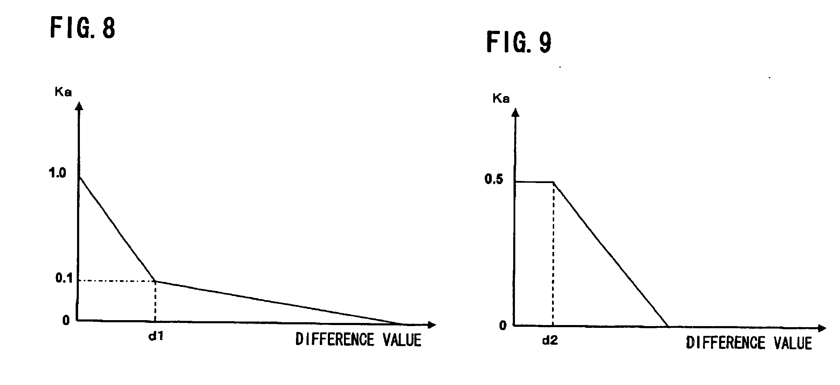

FIG 8 shows an example of the relationship between the difference value and the weighting coefficient at the step S4. In the example shown in FIG 8, a base weighting coefficient Ka changes so as to decrease as the difference value increases, and the rate of change of the base weighting coefficient Ka with respect to the difference value becomes lower when the difference value exceeds a difference threshold d1. Changing the base weighting coefficient Ka in this manner has the following advantage. When the difference value is between zero and the difference threshold d1, the weighting coefficient can be large to provide a higher degree of averaging for obtaining the weighted average. On the other hand, when the difference value is larger than the difference threshold d1, a lower degree of averaging can be provided for obtaining the weighted average because the rate of change of the base weighting coefficient Ka with respect to the difference value is lower. By using the base weighting coefficient Ka changing in this manner to perform a noise removal process, the imaging device 1 can enhance the removal of noise when the difference value is small. Further, when the difference value is larger than the difference threshold d1, the imaging device 1 can have the lower rate of change of the base weighting coefficient Ka with respect to the difference value. This can avoid an abrupt change of weighting coefficient, thus preventing an image from looking unnatural.

FIG 9 shows another example of the relationship between the difference value and the weighting coefficient. The example shown in FIG 9 uses a base weighting coefficient Ka described below. When the difference value is between zero and a difference threshold d2, the base weighting coefficient Ka is a fixed value (0.5 for example). When the difference value is larger than the difference threshold d2, the base weighting coefficient Ka changes so as to decrease as the difference value increases. By changing the base weighting coefficient Ka in this manner, a fixed large value can be used as a weighting coefficient when the difference value is between zero and the difference threshold d2. Thereby, the degree of averaging for obtaining the weighted average can be increased. Accordingly, by using this base weighting coefficient Ka to perform a noise removal process, the imaging device 1 can enhance the removal of noise when the difference value is between zero and the difference threshold d2.

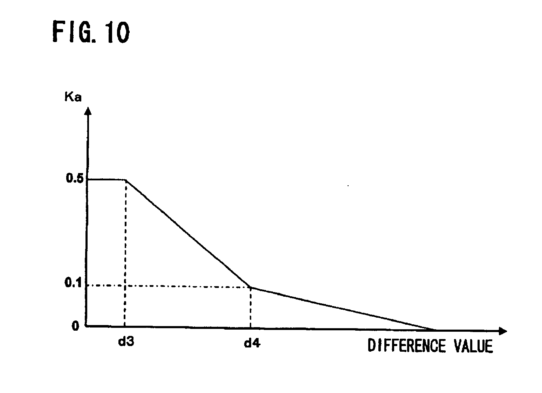

FIG 10 shows a further example of the relationship between the difference value and the weighting coefficient. The example shown in FIG 10 uses a base weighting coefficient Ka described below. When the difference value is between zero and a difference threshold d3, the base weighting coefficient Ka is a fixed value (0.5 for example). When the difference value is larger than the difference threshold d3, the base weighting coefficient Ka changes so as to decrease as the difference value increases. Further, the rate of change of the base weighting coefficient Ka with respect to the difference value is lower for the difference value larger than a difference threshold d4 than for the difference value between the difference threshold d3 and the difference threshold d4. By changing the base weighting coefficient Ka in this manner, a fixed large value can be used as a weighting coefficient when the difference value is between zero and the difference threshold d3. Thereby, the degree of averaging for obtaining the weighted average can be increased. On the other hand, for the difference value larger than the difference threshold d4, the rate of change of the base weighting coefficient Ka is relatively low. Therefore, the degree of averaging for obtaining the weighted average can be reduced. By using the base weighting coefficient Ka changing in this manner to perform a noise removal process, the imaging device 1 can enhance the removal of noise when the difference value is between zero and the difference threshold d3. Further, when the difference value is larger than the difference threshold d4, the imaging device 1 can have the lower rate of change of the base weighting coefficient Ka with respect to the difference value. This can avoid an abrupt change of weighting coefficient, thus preventing an image from looking unnatural.

As described above, the imaging device 1 embodying the present invention changes the base weighting coefficient Ka and weighting coefficients in accordance with the difference value. Therefore, the imaging device 1 can reduce the degree of averaging of luminance values by the weighted average method when the variation in luminance values is large, i.e., when the difference value is large, and can increase the degree of averaging when the variation in luminance values is small, i.e., when the difference value is small. Accordingly, it is possible to reduce luminance noise in a target pixel without breaking contours or other fine structures of a taken image. In addition, since the noise removal process is simple as compared to the conventional processes such as the process by two dimensional differentiation, it can be performed relatively fast. Therefore, the processing time can be reduced.

The present invention has been described above using a presently preferred embodiment, but those skilled in the art will appreciate that various modifications are possible. For example, in the above example shown in FIG 2, the target pixel and the adjacent pixels are arranged in a 3 by 3 matrix. The arrangement is not limited to the 3 by 3 matrix but may be a 5 by 5 matrix having 24 adjacent pixels for a target pixel. Alternatively, it is also possible to calculate a weighed average using an arbitrarily sized small area.

Further, in the above examples shown in FIG 3 to FIG 7, the noise removal process is performed for the luminance value of a pixel. As an alternative, the above described noise removal process may be performed for the color difference value or the color value such as RGB intensity.

This application is based on Japanese patent application 2006-234030 filed August 30, 2006, the contents of which are hereby incorporated by reference.

## Claims

1. An imaging device comprising:
imaging means for taking an image of an object to have a taken image made up of a collection of pixels each having a pixel value including at least any one of a luminance value, a color difference value, and a color value;
control means for controlling components, which include the imaging means, in the imaging device;
pixel value obtaining means for obtaining a pixel value of a target pixel, which is one of the pixels in the taken image, and pixel values of adjacent pixels adjacent to the target pixel;
weighting coefficient determining means for determining a weighting coefficient to weight in a given manner each of the pixel values of the adjacent pixels that are obtained by the pixel value obtaining means;
average calculating means for calculating a weighted average of the pixel values of the target pixel and the adjacent pixels by using the pixel value of the target pixel, the pixel values of the adjacent pixels, and the weighting coefficient;
pixel value converting means for replacing the pixel value of the target pixel with the weighted average calculated by the average calculating means; and
difference value calculating means for calculating a difference value between a largest pixel value and a smallest pixel value of the pixel values of the target pixel and the adjacent pixels that are obtained by the pixel value obtaining means,
wherein the weighting coefficient determining means changes the weighting coefficient for each of the adjacent pixels in accordance with the difference value calculated by the difference value calculating means.

2. The imaging device according to claim 1,
wherein the weighting coefficient determining means changes the weighting coefficient for each of the adjacent pixels so that the weighting coeffcient decreases as the difference value increases.

3. The imaging device according to claim 1,
wherein, for the difference value between zero and a first difference threshold, the weighting coefficient determining means uses a fixed weighting coefficient for each of the adjacent pixels.

4. The imaging device according to claim 3,
wherein, for the difference value larger than the first difference threshold, the weighting coefficient determining means changes the weighting coefficient for each of the adjacent pixels so that the weighting coefficient decreases as the difference value increases.

5. The imaging device according to claim 4,
wherein the weighting coefficient determining means changes the weighting coefficient for each of the adjacent pixels so that rate of change of the weighting coefficient with respect to the difference value is lower for the difference value larger than a second difference threshold than for the difference value between the first difference threshold and the second difference threshold.
